# FASCICULE DE BREVET EUROPEEN

(11) **EP 2 492 127 B1**
(45) Date de publication et mention de la délivrance du brevet: **02.11.2016**
(21) Numéro de dépôt: 12154954.7
(22) Date de dépôt: 10.02.2012
(51) Int. Cl.: B60K 11/08, B29C 45/00

(54) **Cadre pour module de refroidissement de moteur de véhicule**
Rahmen für Kühlmodul eines Fahrzeugmotors
Frame for cooling module of a vehicle engine

(30) Priorité: 22.02.2011 FR 1151432
(43) Date de publication de la demande: 29.08.2012
(73) Titulaire: Valeo Systèmes Thermiques, 78320 Le Mesnil-Saint-Denis (FR)
(72) Inventeur: Bedouain, Philippe, 53950 LOUVERNE (FR); Lardans, François, 53000 LAVAL (FR); Tricot, David, 53810 CHANGE (FR); Merceron, Vincent, 53360 HOUSSAY (FR)
(74) Mandataire: Delplanque, Arnaud

(56) Documents cités:
- EP-A1- 0 605 325
- WO-A1-01/89795
- GB-A- 1 160 749
- US-A- 4 619 073

## Description

L'invention concerne un module de refroidissement pour moteur de véhicule, notamment automobile, et plus particulièrement un cadre de module de refroidissement pour moteur de véhicule.

Un module de refroidissement pour moteur de véhicule comprend, par exemple, un ventilateur et un cadre (ou buse) monté autour du ventilateur. Le ventilateur est destiné à créer un flux d'air à travers un radiateur de refroidissement du moteur.

On connaît un cadre comportant une armature de support et au moins un volet permettant d'obturer une ouverture formée dans l'armature pour le passage d'un flux d'air. Un tel volet s'ouvre par la pression dynamique du flux d'air lorsque le véhicule roule à une vitesse suffisamment élevée et se ferme, par gravité et par dépression, lorsque le module de refroidissement fonctionne, à faible vitesse du véhicule.

On sait qu'un tel volet est réalisé aujourd'hui par moulage à plat et ensuite monté sur le cadre, par exemple par emboîtage par clip, de pions d'articulation du volet dans l'armature de support.

Un tel assemblage par emboîtage induit une déformation du volet, ce qui peut le fragiliser ou l'endommager, par exemple au niveau des pions d'articulations du volet. Un tel assemblage induit en outre une étape de montage supplémentaire.

Par ailleurs, un tel moulage à plat implique un pressage de matière conduisant à l'apparition d'un plan de joint de moulage, notamment au niveau des pions d'articulation du volet. Un tel plan de joint de moulage crée des déformations des prolongements ralentissant la rotation du volet autour de son axe, diminuant ainsi son efficacité.

Un tel moulage à plat entraîne de plus l'apparition d'un ou plusieurs points d'injection de matière sur les flancs du volet, ce qui dénature la planéité de la surface desdits flancs et rend par conséquent le volet moins efficace lors de son utilisation.

Un moulage séparé du volet implique par ailleurs l'utilisation d'un moule spécifique et d'une presse spécifique à injecter la matière.

De plus, le moulage implique une étape d'utilisation d'un éjecteur pour éjecter le volet du moule après moulage, aussi appelée démoulage en force. Dans les procédés de moulage existants, l'éjecteur laisse des marques d'éjection sur les flancs du volet, ce qui dénature la planéité de la surface desdits flancs et rend par conséquent le volet moins efficace lors de son utilisation.

Un cadre selon le préambule de la revendication 1 est connu du document EP 0 605 325 A1.

L'invention a pour but de résoudre ces inconvénients et concerne un cadre pour module de refroidissement de moteur de véhicule, notamment automobile, selon la revendication 1. Un tel cadre permet d'éviter l'utilisation, pour la réalisation du volet, d'un moule spécifique et d'une presse spécifique à injecter la matière.

Il n'y a par ailleurs plus d'assemblage du volet à effectuer sur le cadre, ce qui représente un gain de temps et une fabrication globalement plus aisée du cadre et du (ou des) volet(s) en une seule fois. Ceci permet en outre d'éviter l'utilisation d'un système de clip qui pourrait induire une déformation du volet lors de l'assemblage sur le cadre.

Ceci a aussi pour avantage de permettre un démoulage aisé, en une seule fois, et utilisant des éjecteurs ne laissant ainsi pas de trace d'éjection sur des flancs du volet.

Selon une autre caractéristique de l'invention, les prolongements sont articulés de façon flottante dans lesdits moyens d'articulation de volet afin de permettre la rotation desdits prolongements et donc du volet dans les moyens d'articulation de volet. On entend par là que les prolongements sont articulés en rotation dans les moyens d'articulation de volet avec un jeu radial supérieur, au moins localement, à celui nécessaire à autoriser la rotation des prolongements dans les moyens d'articulation.

Le volet comprend avantageusement un plan de joint de moulage localisé dans la partie d'obturation. Lors du moulage, la matière est ainsi injectée au niveau de l'axe de rotation du volet, assurant le remplissage des volumes du moules définissant les prolongements du volet. Le volet se trouve en outre renforcé au niveau de son axe de rotation. De plus, il n'y a plus de plan de joint de moulage sur les prolongements du volet, ce qui rend aisée la rotation du volet autour dudit axe puisque les prolongements ne sont plus déformés par un plan de joint de moulage.

De préférence, la surface externe des prolongements du volet est lisse. En particulier, comme évoqué au-dessus, il n'y a pas de plan de joint de moulage au niveau des prolongements.

Selon une caractéristique de l'invention, l'armature de support comprend de plus des moyens de retenue aptes à retenir le volet dans une position maximale d'ouverture lors de son utilisation. Ceci permet de contrôler l'angle d'ouverture du volet, évitant ainsi que le volet ne s'ouvre trop et percute des pièces voisines ou ne vienne frapper le cadre.

Selon une autre caractéristique de l'invention, le volet comprend de plus au moins une butée apte à être positionnée sur les moyens de retenue du cadre dans une position maximale d'ouverture du volet lors de son utilisation.

Avantageusement, les prolongements du volet présentent un jeu variable axialement ou angulairement tout en présentant une direction de démoulage selon l'axe de rotation du volet. Le jeu radial est ainsi compris, notamment, entre 0,1 et 0,2 mm dans les zones de jeu minimum et entre 0,5 et 3 mm dans les zones de jeux maximum. Ceci permet un moulage aisé du volet au niveau de ses prolongements et d'assurer le moulage entier par injection d'une seule matière. Les prolongements du volet peuvent ainsi être de multiples formes telles que par exemple cylindriques, sphériques, coniques, parallélépipédiques, de section triangulaire ou en forme d'étoile. De telles formes garantissent une bonne rotation du volet autour de son axe. En particulier, l'utilisation de piges définissant des volumes complémentaires des formes des prolongements est aisée puisque de telles piges sont faciles à retirer après moulage. Des prolongements, par exemple, de section de forme triangulaire ou en forme d'étoile permettent notamment d'utiliser des piges plus robustes car localement plus épaisse (au droit du jeu radial le plus important entre les prolongements et les moyens d'articulation) tout en minimisant le flottement (au droit du jeu radial le moins important entre les prolongements et les moyens d'articulation).

Selon une autre caractéristique de l'invention, l'armature de support comprend de plus au moins une butée de blocage de volet agencée pour bloquer le volet dans une position d'ouverture comprise entre 45 et 135 degrés par rapport au plan de l'armature de support, empêchant une inversion des volets.

De préférence, le cadre et le ou les volet(s) sont moulés avec la même matière.

L'invention concerne aussi un module de refroidissement de moteur de véhicule, notamment automobile, comprenant un cadre, comprenant une armature de support et au moins un volet, tel que défini ci-dessus.

L'invention concerne aussi un procédé de moulage d'un cadre pour module de refroidissement de moteur de véhicule, notamment automobile, selon la revendication 11.

L'utilisation de piges permet ainsi de mouler les prolongements du volet dans les moyens d'articulation tout en créant des volumes, occupés par les piges pendant le moulage, puis libérés lors du retrait des piges, permettant ainsi d'assurer une articulation des prolongements dans les moyens d'articulation de volet. Une telle articulation est flottante, le jeu présent entre les prolongements du volet et les moyens d'articulation correspondant à l'épaisseur des piges.

L'étape de moulage comprend avantageusement la réalisation d'un plan de joint de moulage au niveau de la partie d'obturation du volet.

De préférence, le volet est moulé dans une position de moulage et le procédé comprend de plus une étape, postérieure à l'étape de démoulage du cadre, de placement du volet dans une position d'utilisation, distincte de la position de moulage.

Une forme de réalisation de l'invention va maintenant être décrite plus en détail, à titre d'exemple non limitatif, en référence aux dessins annexés (sur ces figures, des références identiques désignent des éléments semblables) sur lesquels :
- la figure 1 illustre en perspective une partie de cadre et un volet selon l'invention, le volet étant en position verticale, après moulage, et avant positionnement dans une position d'utilisation ;
- la figure 2a représente une pluralité de volets, montés sur un cadre, après moulage et avant positionnement dans une position d'utilisation ;
- la figure 2b représente une pluralité de volets, montés sur un cadre comportant des butées de blocage, après moulage et avant positionnement dans une position d'utilisation ;
- la figure 3 représente une pluralité de volets en position fermée, montés sur un cadre ;
- la figure 4 représente une pluralité de volets, montés sur un cadre, dans diverses positions d'utilisation ;
- la figure 5 illustre en perspective les moyens d'articulation de volet, les moyens de retenue et le volet selon l'invention ;
- la figure 6 représente en perspective une pluralité de volets, montés sur un cadre, en position ouverte, après moulage et positionnés dans une position ouverte d'utilisation ;
- la figure 7a illustre schématiquement en perspective un prolongement, du volet selon l'invention, de forme triangulaire ;
- la figure 7b représente schématiquement en perspective un prolongement du volet selon l'invention, en forme d'étoile ;
- la figure 8a représente schématiquement en perspective les moyens d'articulation de volet, les moyens de retenue, et la butée d'un volet selon l'invention ;
- la figure 8b représente schématiquement en vue de dessus les jeux entre, d'une part, les moyens d'articulation de volet et la partie d'obturation du volet selon l'invention, et d'autre part, entre les moyens de retenue et la partie d'obturation du volet selon l'invention ;
- la figure 9a illustre l'étape de mise en place du moule et des piges avant le moulage du cadre et du volet dans le procédé selon l'invention ;
- la figure 9b illustre l'étape d'injection de matière dans le moule, les piges étant positionnées, dans le procédé selon l'invention ;
- la figure 9c illustre l'étape de retrait des piges dans le procédé selon l'invention ;
- la figure 9d illustre l'étape de démoulage du cadre et du volet dans le procédé selon l'invention ;
- la figure 9e illustre schématiquement les jeux entre les moyens d'articulation de volet et un prolongement du volet selon l'invention.

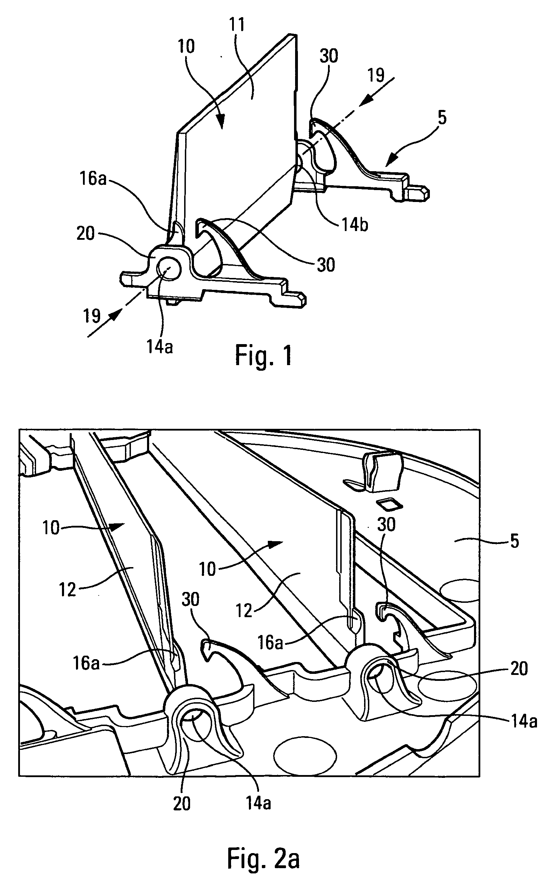

Aux figures 1 à 6, on a représenté un cadre comprenant une armature de support 5 un ou plusieurs volets 10.

Le cadre comprend une armature de support 5 et au moins un volet 10 apte à obturer tout ou partie d'une ouverture de l'armature 5.

L'armature de support 5 et le volet 10 sont configurés de façon à provenir d'une même opération de moulage, décrite ci-après, tout en autorisant la rotation du volet 10 autour d'un axe de rotation 19 entre une position fermée et une position ouverte.

L'armature de support 5 comprend des moyens d'articulation de volet 20 et le volet 10 comprend une partie d'obturation et deux prolongements 14a et 14b s'étendant chacun latéralement de la partie d'obturation du volet 10 dans lesdits moyens d'articulation de volet 20.

Les moyens d'articulation de volet 20 du cadre sont aptes à supporter le volet 10 et à en autoriser la rotation autour de l'axe de rotation 19 entre une position fermée et une position ouverte du volet 10. Ils se présentent sous la forme d'une excroissance de matière présentant une lumière accueillant les prolongements 14a et 14b.

Les moyens d'articulation de volet 20 sont issus de matière de l'armature de support 5 et les prolongements 14a et 14b sont issus de matière de la partie d'obturation.

Le volet 10 comprend une flanc facial 11 sur lequel s'appuie un flux d'air, lors de l'utilisation du volet 10, pour faire basculer le volet 10 entre une position ouverte et une position fermée autour de l'axe de rotation 19 du volet 10.

Le volet 10 comprend également un flan arrière 12, opposé au flan facial 11. Les flancs 11 et 12, se rejoignant, forment la partie d'obturation, prévue de façon centrale, du volet 10.

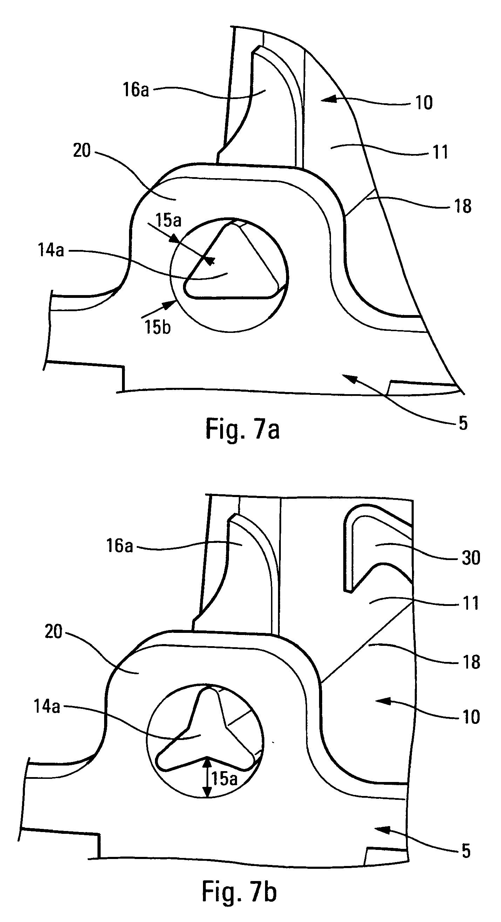

Comme illustré sur les figures 1 à 7 , l'armature de support 5 comprend en outre des moyens de retenue 30 du volet 10 et le volet 10 comprend en outre deux butées 16a et 16b situées de part et d'autre de la sa partie d'obturation.

Les butées 16a et 16b permettent aux moyens de retenue 30 de l'armature de support 5 de retenir le volet 10, limitant ainsi le basculement du volet et définissant ainsi une position maximale d'ouverture du volet lors de son utilisation.

Les moyens de retenue 30 peuvent prendre la forme, par exemple, de crochets de retenue comme illustré. Les moyens de retenue 30 sont issus de matière de l'armature de support 5.

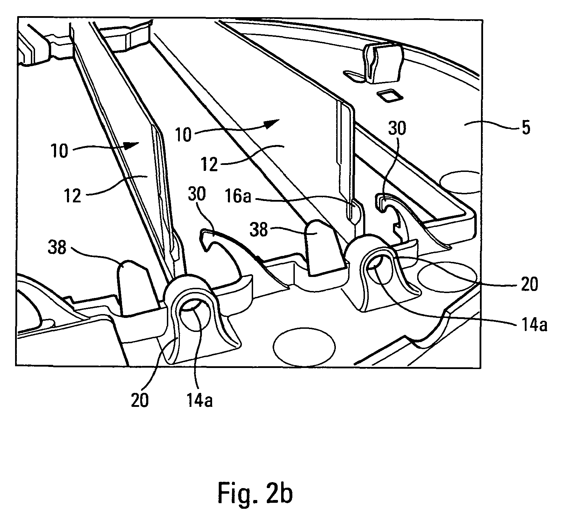

Sur les figures 1, 2a et 2b, les volets 10 sont en position verticale de moulage, après moulage. En effet, lors du moulage, le volet 10 ne peut être positionné pour être retenu par les moyens de retenue 30. Il est donc moulé dans une position de moulage puis positionné dans une position d'utilisation, par exemple par clippage des butées 16a et 16b dans les moyens de retenue 30.

Comme illustré par la figure 2b, l'armature de support 5 du cadre peut comporter des butées de blocage 38 agencées pour bloquer la rotation du volet 10dans une position d'ouverture. De telles butées de blocage 38 permettent au volet 10 de ne pas trop s'éloigner des moyens de retenue 30, facilitant ainsi l'opération de montage du volet 10 dans les moyens de retenue 30 ou d'empêcher une inversion complète des volets s'ils venaient à sortir desdits moyens de retenue 30.

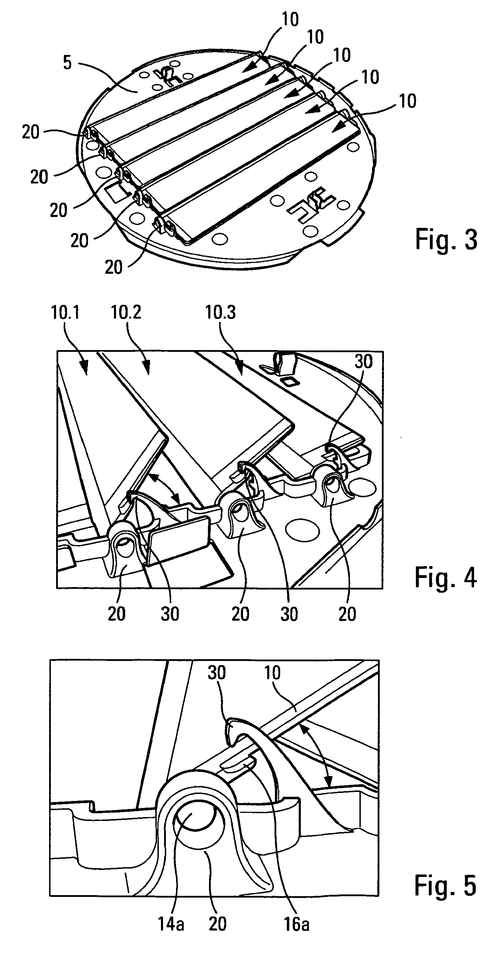

Sur les figures 3 à 7, les volets 10 sont montés en position d'utilisation, c'est-à-dire que les moyens de retenue 30 sont apte à retenir les volets 10 par l'intermédiaire des butées 16a et 16b.

On notera toutefois que dans le cas où l'armature de support 5 ne comporte pas de moyens de retenue 30, alors toutes les positions du volet 10 sont des positions d'utilisation.

En particulier, sur la figure 3, les volets 10 sont dans une position fermée, i.e. de fermeture.

Sur la figure 4 :
- le volet 10.1 est dans une position maximale d'ouverture,
- le volet 10.2 est dans une position d'ouverture, entre la position maximale d'ouverture et la position fermée,
- le volet 10.3 est dans une position fermée.

Le volet 10 peut bien sûr occuper toutes les positions entre sa position d'ouverture maximale et sa position fermée.

La figure 5 décrit un volet 10 d'un cadre dans une position ouverte d'utilisation. Les prolongements 14a et 14b du volet 10 sont logés dans les moyens d'articulation de volet 20 de l'armature de support 5 du cadre. Le volet est apte à basculer en rotation entre un position fermée et une position maximale ouverte définie par les moyens de retenue 30 du volet 10 sur les butées 16a et 16b.

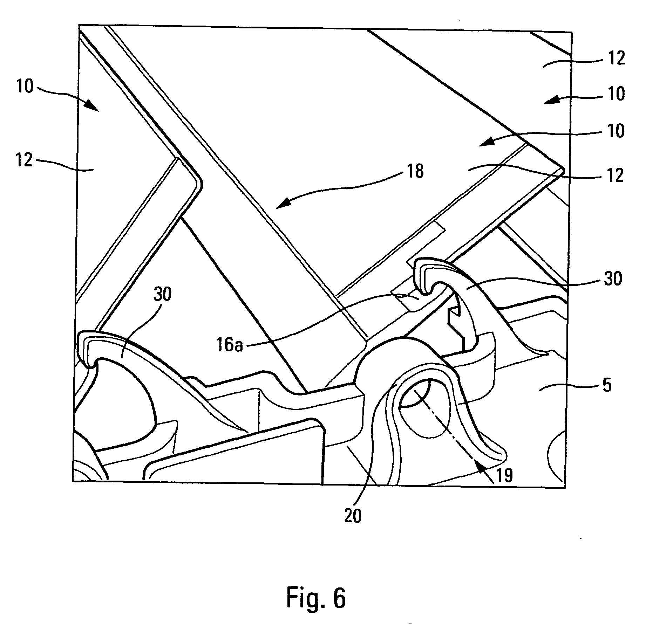

Un plan de joint de moulage 18 est représenté sur la figure 6. Le plan de joint de moulage 18 s'étend longitudinalement dans l'épaisseur du volet 10. De manière préférée, le plan de joint de moulage 18 comprend l'axe de rotation 19 du volet 10. En revanche, les prolongements 14a et 14b ont une surface lisse, c'est-à-dire que le plan de joint de moulage 18 ne déforme pas les prolongements 14a et 14b.

La forme des prolongements 14a et 14b est donnée lors du moulage, par exemple par érosion dans des piges de forme complémentaire. Ceci permet d'obtenir un plan sans joint au niveau des prolongements 14a et 14b. En d'autres termes, le plan de joint de moulage 18 ne déforme pas les prolongements 14a et 14b. L'utilisation de piges dans le moule utilisé pour le moulage du cadre 5 et du volet 10 permet de venir réaliser l'axe de rotation du volet.

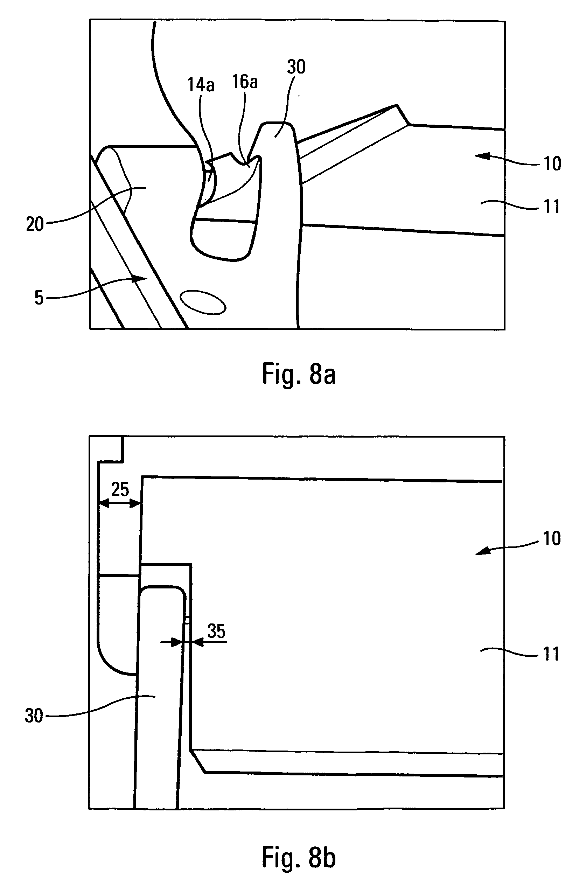

La figure 8a représente les moyens de retenue 30 en appuie sur la butée 16a du volet 10. Le prolongement 14a s'étend dans les moyens d'articulation de volet 20 de l'armature de support 5 du cadre.

Des jeux latéraux peuvent être prévus lors du dimensionnement du moule utilisé pour le moulage de l'armature de support 5 du cadre et du volet 10 afin de faciliter la rotation du volet autour de son axe de rotation 19. Ainsi, un jeu latéral 25, par exemple supérieur à 3 mm, peut être prévu entre les moyens d'articulation de volet 20 de l'armature de support 5 et la partie d'obturation du volet 10, plus précisément la partie de butée 16a. De même, un jeu latéral 35, par exemple supérieur à 0,5 mm, peut être prévu entre les moyens de retenu 30 et la partie d'obturation du volet 10.

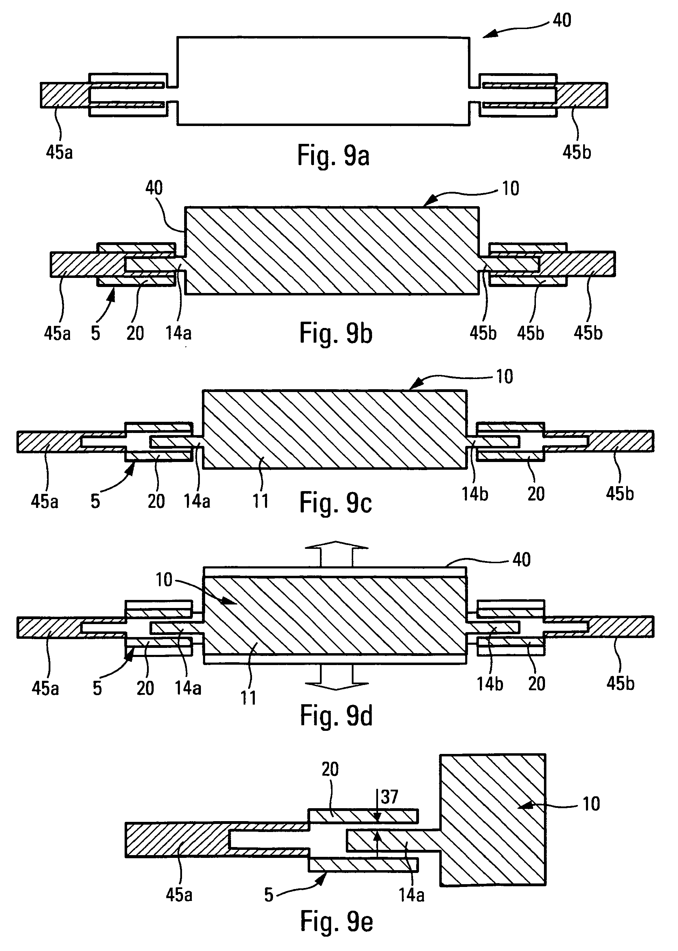

Les figures 9a à 9e décrivent le procédé de moulage du cadre selon l'invention.

Dans une étape E1, des piges 45a et 45b sont tout d'abord positionnées dans un moule 40.

Une matière est ensuite introduite dans le moule 40 dans une étape E2 formant ainsi la partie d'obturation et les prolongements 14a et 14b du volet 10 et tout ou partie de l'armature de support 5 dont seuls les moyens d'articulation de volet 20 sont représentés sur les figures 9a à 9e.

Les piges 45a et 45b sont alors retirées de l'ensemble dans une étape E3, libérant les espaces 37 entre les moyens d'articulation de volet 20 de l'armature de support 5 et les prolongements 14a et 14b du volet 10.

Finalement, le moule 40 est retiré dans une étape E4.

L'injection de matière peut être mono-matière ou bi-matière, par exemple l'armature de support 5 peut être moulé en PA6GF30 ou PA6,6 et le ou les volets 10 en polypropylène.

Une fois moulé en position, par exemple, verticale, le volet est ensuite placé, comme décrit ci-dessus, sous les moyens de retenue 30, dans une position d'utilisation, distincte de la position de moulage.

Comme déjà évoqué, l'utilisation des piges 45a et 45b permet d'assurer le moulage d'axes d'articulation du volet, en l'occurrence les prolongements 14a, 14b de la partie d'obturation du volet, qui soit libre en rotation par rapport à l'armature de support, en l'occurrence les moyens d'articulation 20, et ceci de façon flottante en raison du jeu induit par lesdites piges 45a et 45b.

## Revendications

1. Cadre pour module de refroidissement de moteur de véhicule, notamment automobile, ledit cadre comprenant une armature de support (5) et au moins un volet (10) apte à obturer tout ou partie d'une ouverture de l'armature (5), l'armature de support (5) et le volet (10) étant configurés de façon à provenir d'une même opération de moulage tout en autorisant la rotation du volet (10) autour d'un axe de rotation (19) entre une position fermée et une position ouverte, cadre **caractérisé par le fait que**
l'armature de support (5) comprend des moyens d'articulation de volet (20), ledit volet (10) comprenant une partie d'obturation et deux prolongements (14a, 14b) s'étendant chacun latéralement de la partie d'obturation du volet (10) dans lesdits moyens d'articulation de volet (20), les moyens d'articulation de volet (20) étant issus de matière de l'armature de support (5) et les prolongements (14a, 14b) étant issus de matière de la partie d'obturation.

2. Cadre selon la revendication 1, dans lequel les prolongements (14a, 14b) sont articulés de façon flottante dans lesdits moyens d'articulation de volet (20).

3. Cadre selon l'une quelconque des revendications 1 ou 2, dans lequel le volet (10) comprend un plan de joint de moulage (18) localisé dans la partie d'obturation.

4. Cadre selon l'une quelconque des revendications 1 à 3, dans lequel la surface externe des prolongements (14a, 14b) du volet (10) est lisse.

5. Cadre selon l'une quelconque des revendications précédentes, dans lequel l'armature de support (5) comprend de plus des moyens de retenue (30) aptes à retenir le volet (10) dans une position maximale d'ouverture lors de son utilisation.

6. Cadre selon la revendication 5, dans lequel le volet (10) comprend de plus au moins une butée (16a, 16b) apte à être positionnée sur les moyens de retenue (30) du cadre (5) dans une position maximale d'ouverture du volet (10) lors de son utilisation.

7. Cadre selon l'une quelconque des revendications précédentes, dans lequel les prolongements (14a, 14b) du volet (10) présentent un jeu (15a, 15b) variable axialement ou angulairement tout en présentant une direction de démoulage selon l'axe de rotation du volet.

8. Cadre selon l'une quelconque des revendications précédentes, dans lequel l'armature de support (5) comprend de plus au moins une butée de blocage (38) de volet (10) agencée pour bloquer le volet dans une position d'ouverture comprise entre 45 et 135 degrés par rapport au plan de l'armature de support (5).

9. Cadre selon l'une quelconque des revendications précédentes, dans lequel l'armature de support (5) et le volet (10) sont moulés avec la même matière.

10. Module de refroidissement de moteur de véhicule, notamment automobile, comprenant un cadre (5) comprenant une armature de support (5) et au moins un volet (10) selon l'une des revendications 1 à 9.

11. Procédé de moulage d'un cadre pour module de refroidissement de moteur de véhicule, notamment automobile, ledit cadre comprenant une armature de support (5) et au moins un volet (10) apte à obturer tout ou partie d'une ouverture de l'armature (5), l'armature de support (5) comprenant des moyens d'articulation de volet (20), le volet comprenant une partie d'obturation et des prolongements (14a, 14b) s'étendant chacun latéralement de la partie d'obturation du volet (10) dans lesdits moyens d'articulation de volet (20), le procédé comprenant une étape de moulage simultané de l'armature de support (5) et du volet (10) autorisant la rotation du volet (10) autour d'un axe de rotation (19) entre une position fermée et une position ouverte, les moyens d'articulation de volet (20) étant issus de matière de l'armature de support (5) et les prolongements (14a, 14b) étant issus de matière de la partie d'obturation, procédé dans lequel l'étape de moulage est réalisée à partir d'un moule (40) et de deux piges (45a, 45b) et comprend :
- une étape E1 de mise en place desdites piges (45a, 45b) définissant chacune un volume pour les prolongements (14a, 14b) du volet (10),
- une étape E2 d'injection de matière dans le moule (40) délimitant l'armature de support (5) et le volet (10),
- une étape E3 de retrait des piges (45a, 45b),
- une étape E4 de démoulage du cadre.

12. Procédé selon la revendication 11, dans lequel l'étape de moulage comprend la réalisation d'un plan de joint de moulage (18) au niveau de la partie d'obturation du volet (10).

13. Procédé selon l'une des revendications 11 ou 12, dans lequel le volet (10) est moulé dans une position de moulage, ledit procédé comprenant de plus une étape, postérieure à l'étape E4 de démoulage du cadre, de placement du volet (10) dans une position d'utilisation, distincte de la position de moulage.

## Patentansprüche

1. Rahmen für ein Kühlmodul eines Fahrzeugmotors, insbesondere eines Automobils, wobei der Rahmen eine Stützstruktur (5) und mindestens eine Klappe (10) umfasst, die eine Öffnung der Struktur (5) ganz oder teilweise verschließen kann, wobei die Stützstruktur (5) und die Klappe (10) dazu konfiguriert sind, aus einem gleichen Formvorgang hervorzugehen, wobei die Drehung der Klappe (10) um eine Drehachse (19) zwischen einer geschlossenen Position und einer geöffneten Position gestattet wird, wobei der Rahmen **dadurch gekennzeichnet ist, dass**
die Stützstruktur (5) Klappenanlenkmittel (20) umfasst, wobei die Klappe (10) einen Verschlussteil und zwei Verlängerungen (14a, 14b) umfasst, die sich jeweils seitlich des Verschlussteils der Klappe (10) in den Klappenanlenkmitteln (20) erstrecken, wobei die Klappenanlenkmittel (20) integral mit der Stützstruktur (5) ausgebildet sind und die Verlängerungen (14a, 14b) integral mit dem Verschlussteil ausgebildet sind.

2. Rahmen nach Anspruch 1, wobei die Verlängerungen (14a, 14b) schwimmend in den Klappenanlenkmitteln (20) angelenkt sind.

3. Rahmen nach Anspruch 1 oder 2, wobei die Klappe (10) eine Formverbindungsebene (18) umfasst, die in dem Verschlussteil positioniert ist.

4. Rahmen nach einem der Ansprüche 1 bis 3, wobei die Außenfläche der Verlängerungen (14a, 14b) der Klappe (10) glatt ist.

5. Rahmen nach einem der vorhergehenden Ansprüche, wobei die Stützstruktur (5) ferner Haltemittel (30) umfasst, die die Klappe (10) bei ihrer Verwendung in einer maximalen Öffnungsposition halten können.

6. Rahmen nach Anspruch 5, wobei die Klappe (10) ferner mindestens einen Anschlag (16a, 16b) umfasst, der an den Haltemitteln (30) des Rahmens (5) in einer maximalen Öffnungsposition der Klappe (10) bei ihrer Verwendung positioniert werden kann.

7. Rahmen nach einem der vorhergehenden Ansprüche, wobei die Verlängerungen (14a, 14b) der Klappe (10) ein axial oder winkelförmig variables Spiel (15a, 15b) aufweisen, wobei sie eine Entformungsrichtung entlang der Drehachse der Klappe aufweisen.

8. Rahmen nach einem der vorhergehenden Ansprüche, wobei die Stützstruktur (5) ferner mindestens einen Blockieranschlag (38) der Klappe (10) umfasst, der dazu angeordnet ist, die Klappe in einer Öffnungsposition zwischen 45 und 135 Grad bezüglich der Ebene der Stützstruktur (5) zu blockieren.

9. Rahmen nach einem der vorhergehenden Ansprüche, wobei die Stützstruktur (5) und die Klappe (10) aus dem gleichen Material geformt sind.

10. Kühlmodul eines Fahrzeugmotors, insbesondere eines Automobils, umfassend einen Rahmen (5), der eine Stützstruktur (5) und mindestens eine Klappe (10) nach einem der Ansprüche 1 bis 9 umfasst.

11. Verfahren zum Formen eines Rahmens für ein Kühlmodul eines Fahrzeugmotors, insbesondere eines Automobils, wobei der Rahmen eine Stützstruktur (5) und mindestens eine Klappe (10) umfasst, die eine Öffnung der Struktur (5) ganz oder teilweise verschließen kann, wobei die Stützstruktur (5) Klappenanlenkmittel (20) umfasst, wobei die Klappe einen Verschlussteil und Verlängerungen (14a, 14b) umfasst, die sich jeweils seitlich des Verschlussteils der Klappe (10) in den Klappenanlenkmitteln (20) erstrecken, wobei das Verfahren einen Schritt des gleichzeitigen Formens der Stützstruktur (5) und der Klappe (10) umfasst, wobei die Drehung der Klappe (10) um eine Drehachse (19) zwischen einer geschlossenen Position und einer geöffneten Position gestattet wird, wobei die Klappenanlenkmittel (20) integral mit der Stützstruktur (5) ausgebildet werden und die Verlängerungen (14a, 14b) integral mit dem Verschlussteil ausgebildet werden,
wobei bei dem Verfahren der Schritt des Formens unter Verwendung einer Form (40) und zwei Einsätzen (45a, 45b) durchgeführt wird und Folgendes umfasst:
- einen Schritt E1 des Einsetzens der Einsätze (45a, 45b), die jeweils einen Raum für die Verlängerungen (14a, 14b) der Klappe (10) definieren,
- einen Schritt E2 des Einspritzens von Material in die Form (40), die die Stützstruktur (5) und die Klappe (10) begrenzt,
- einen Schritt E3 des Entfernens der Einsätze (45a, 45b),
- einen Schritt E4 des Entformens des Rahmens.

12. Verfahren nach Anspruch 11, wobei der Schritt des Formens die Erzeugung einer Formverbindungsebene (18) am Verschlussteil der Klappe (10) umfasst.

13. Verfahren nach Anspruch 11 oder 12, wobei die Klappe (10) in einer Formposition geformt wird, wobei das Verfahren ferner einen dem Schritt E4 des Entformens des Rahmens folgenden Schritt des Platzierens der Klappe (10) in eine Gebrauchsposition, die von der Formposition verschieden ist, umfasst.

## Claims

1. Frame for a cooling module of a vehicle engine, in particular a motor vehicle engine, said frame comprising a support structure (5) and at least one flap (10) that is able to obscure all or part of an opening of the structure (5), the support structure (5) and the flap (10) being configured so as to originate in a single moulding operation while allowing the flap (10) to rotate about an axis of rotation (19) between a closed position and an open position, the frame being **characterized in that**
the support structure (5) comprises flap articulation means (20), said flap (10) comprising an obturator portion and two extensions (14a, 14b) that each extend laterally from the obturator portion of the flap (10) into said flap articulation means (20), the flap articulation means (20) being integral with the support structure (5) and the extensions (14a, 14b) being integral with the obturator portion.

2. Frame according to Claim 1, in which the extensions (14a, 14b) are articulated in a floating manner in said flap articulation means (20).

3. Frame according to either of Claims 1 and 2, in which the flap (10) comprises a moulding joint plane (18) located in the obturator portion.

4. Frame according to any one of Claims 1 to 3, in which the outer surface of the extensions (14a, 14b) of the flap (10) is smooth.

5. Frame according to any one of the preceding claims, in which the support structure (5) further comprises retaining means (30) that are able to retain the flap (10) in a fully open position during use.

6. Frame according to Claim 5, in which the flap (10) further comprises at least one stop (16a, 16b) that is able to be positioned on the retaining means (30) of the frame (5) in a fully open position of the flap (10) during use.

7. Frame according to any one of the preceding claims, in which the extensions (14a, 14b) of the flap (10) have a clearance (15a, 15b) that is able to vary axially or angularly while having a demoulding direction in line with the axis of rotation of the flap.

8. Frame according to any one of the preceding claims, in which the support structure (5) further comprises at least one immobilizing stop (38) for the flap (10), which is arranged to immobilize the flap in an open position of between 45 and 135 degrees with respect to the plane of the support structure (5).

9. Frame according to any one of the preceding claims, in which the support structure (5) and the flap (10) are moulded from the same material.

10. Cooling module of a vehicle engine, in particular a motor vehicle engine, comprising a frame (5) comprising a support structure (5) and at least one flap (10), according to one of Claims 1 to 9.

11. Method for moulding a frame for a cooling module of a vehicle engine, in particular a motor vehicle engine, said frame comprising a support structure (5) and at least one flap (10) that is able to obscure all or part of an opening of the structure (5), the support structure (5) comprising flap articulation means (20), the flap comprising an obturator portion and extensions (14a, 14b) that each extend laterally from the obturator portion of the flap (10) into said flap articulation means (20), the method comprising a step of simultaneously moulding the support structure (5) and the flap (10), allowing the flap (10) to rotate about an axis of rotation (19) between a closed position and an open position, the flap articulation means (20) being integral with the support structure (5) and the extensions (14a, 14b) being integral with the obturator portion,
in which method the moulding step is carried out using a mould (40) and two inserts (45a, 45b) and comprises:
- a step E1 of putting in place said inserts (45a, 45b) that each define a volume for the extensions (14a, 14b) of the flap (10),
- a step E2 of injecting material into the mould (40) that delimits the support structure (5) and the flap (10),
- a step E3 of removing the inserts (45a, 45b),
- a step E4 of demoulding the frame.

12. Method according to Claim 11, in which the moulding step comprises the creation of a moulding joint plane (18) on the obturator portion of the flap (10).

13. Method according to either of Claims 11 and 12, in which the flap (10) is moulded in a moulding position, said method further comprising a step, subsequent to the step E4 of demoulding the frame, of placing the flap (10) in a use position that is different from the moulding position.
